# Europäisches Patentamt

## European Patent Office

## Office européen des brevets

(11) Publication number: **0 099 221**
**B1**

## EUROPEAN PATENT SPECIFICATION

(45) Date of publication of patent specification: **12.11.86**

(21) Application number: **83303876.3**

(22) Date of filing: **04.07.83**

(51) Int. Cl.⁴: **C 03 C 10/04,** C 03 C 4/12,
C 03 C 3/064, C 03 C 3/085,
C 03 C 3/091, C 03 B 32/00

(54) Transparent glass-ceramics containing mullite and production thereof.

(30) Priority: **06.07.82 US 395617**

(43) Date of publication of application:
**25.01.84 Bulletin 84/04**

(45) Publication of the grant of the patent:
**12.11.86 Bulletin 86/46**

(84) Designated Contracting States:
**DE FR GB NL**

(56) References cited:
**US-A-3 236 662**
**US-A-3 582 370**
**US-A-3 726 695**

(73) Proprietor: **Corning Glass Works**
**Houghton Park**
**Corning New York 14831 (US)**

(72) Inventor: **Beall, George Halsey**
**106 Woodland Drive**
**Big Flats New York (US)**
Inventor: **Taylor, Mark Peter**
**25 Hillcrest Drive**
**Painted Post New York (US)**
Inventor: **MacDowell, John Fraser**
**446 Beartown Road**
**Painted Post New York (US)**

(74) Representative: **Smith, Sydney et al**
**Elkington and Fife High Holborn House 52/54**
**High Holborn**
**London WC1V 6SH (GB)**

Note: Within nine months from the publication of the mention of the grant of the European patent, any person may give notice to the European Patent Office of opposition to the European patent granted. Notice of opposition shall be filed in a written, reasoned statement. It shall not be deemed to have been filed until the opposition fee has been paid. (Art. 99(1) European patent convention).

Courier Press, Leamington Spa, England.

## Description

This invention relates to transparent glass-ceramics containing mullite and to the production thereof.

In accordance with United States Patent No. 2,920,971 the basic disclosure in the field of glass-ceramic production, such bodies are prepared via three general steps: first, a glass-forming batch is melted; second, that melt is simultaneously cooled and a glass body of a desired configuration shaped therefrom; and, third, that glass body is heat treated at temperatures above the annealing point and, frequently, above the softening point of the glass for a sufficient period of time to cause the glass to crystallize *in situ*. The heat treatment may be scheduled in such a manner as to control the size and, in some instances, the identity of the crystals developed. Therefore, in sum, the crystallization present in a glass-ceramic article may be the result of both the base composition of the precursor glass body and the heat treatment applied thereto.

Transparent glass-ceramic articles are well-known, the classic study thereof being authored by G. H. Beall and D. A. Duke in "Transparent Glass-Ceramics", *Journal of Materials Science, 4*, pages 340—352 (1969). As is explained therein, glass-ceramic bodies will display transparency to the eye when the crystals present therein are considerably smaller than the wavelength of visible light or the birefringence within the crystals and refractive index difference between the crystals and the residual glass are very small. Three general composition areas in the alumino-silicate glass-ceramic system wherein highly transparent articles may be produced were noted. In the first composition field, β-quartz or β-eucryptite solid solution comprises the predominant crystal phase. In the second region, spinel solid solution constitutes the primary crystal phase. In the third area, mullite is the principal crystal phase.

United States Patent No. 3,726,695 relates to a translucent-to-transparent glass-ceramic article which consists essentially, by weight on the oxide basis, of about

$Cs_2O$>4% but <15%.
$Al_2O_3$>15% but <35%, and
$SiO_2$>35% but <80%

the sum of the $Cs_2O$, $Al_2O_3$ and $SiO_2$ contents constituting at least 85% by weight of the total composition, and is composed of a multiplicity of fine-grained crystals substantially homogeneously dispersed within a glassy matrix, said crystals comprising at least 25% by volume of said article and consisting essentially of mullite.

The production of transparent glass-ceramic articles containing β-quartz or β-eucryptite solid solution as the predominant crystal phase has been the subject of numerous patents and scientific papers. United States Patent Nos. 3,241,985 and 3,252,811 are illustrative of such disclosures and the Beall and Duke paper cited above provides a definitive discussion of the composition and process parameters required to prepare such products, along with a study of the crystallization mechanism involved.

Glass compositions capable of being converted into transparent glass-ceramic articles containing zinc spinel, i.e. gahnite ($ZnO . Al_2O_3$), as the predominant crystal phase are disclosed in United States Patent No. 3,681,102. That disclosure also observed that the inclusion of a minor amount of $Cr_2O_3$ in the compositions induced the development of a dark red fluorescence when the glass-ceramic bodies were exposed to ultra-violet and/or visible light. Thus, transparent glass-ceramic articles capable of demonstrating dark red fluorescence could be prepared from glasses consisting essentially, in weight percent on the oxide basis, of 2—20% $ZnO$, 0—5% $MgO$, 8—25% $Al_2O_3$, 0.01—1% $Cr_2O_3$, 55—75% $SiO_2$ and 2—12% $ZrO_2$. The presence of $MgO$ results in a zinc spinel solid solution $(Zn, Mg) Al_2O_4$.

An extensive treatment of the production of glass-ceramic articles, including such articles exhibiting transparency, having base compositions in the $Al_2O_3$—$SiO_2$ system is provided by J. F. MacDowell and G. H. Beall in "Immiscibility and Crystallization in $Al_2O_3$—$SiO_2$ Glasses", *Journal of the Ceramic Society, 52*(1), pages 17—25, (1969). That paper elucidates the phase separation and crystallization mechanisms involved in the conversion into glass-ceramic bodies of both binary $Al_2O_3$—$SiO_2$ glasses and ternary glasses, i.e. $Al_2O_3$—$SiO_2$ glass compositions to which modest amounts of modifying oxides are added, specifically noting $BaO$, $CaO$, and $Na_2O$ as operable modifying oxides. It was observed that the binary glasses readily phase separated such that fast quenching of the glass melts was required to obtain crystal-free precursor glass bodies. The addition of the modifying oxides tended to inhibit phase separation during cooling of the melt, thereby rendering it easier to secure homogeneous glass bodies. Nevertheless, the quantity of modifying oxide added must be carefully controlled. Hence, the molar ratio modifying oxide:$Al_2O_3$ must be maintained less than 1:1 or phase separation will not occur with the consequence that a fine-grained glass-ceramic body cannot be formed.

In contrast, it was noted that small additions of glass network-formers, such as $B_2O_3$, $BeO$, $GeO_2$, $TiO_2$ and $ZnO$, to the ternary system of compositions promoted ready separation of the glass into two phases as the melt cooled, thereby rendering the glass easily crystallizable *in situ* with the resultant glass-ceramic body having mullite or a mullite-cristobalite assemblage as the predominant crystal phase. It was explained that the cations of the network-formers are capable of occupying positions of four-fold oxygen coordination in place of $Si^{4+}$ or of six-fold coordination in a three-dimensional glass network. Because of that capability, the writers posited two possible explanations for the positive effects which the network-former cations exerted upon phase separation and crystallization: (a) tetrahedral $Si^{4+}$ sites were

occupied by the network-former cations, thereby forcing some $Al^{3+}$ into octahedral coordination; or (b) the network-former cations directly became a part of the immiscible, octahedrally-based aluminous (mullite-forming) network. Nucleating agents may be included in the compositions. For example, $Nb_2O_5$, $SnO_2$, $Ta_2O_5$, $TiO_2$, $WO_3$ and $ZrO_2$ are commonly in six-fold coordination with oxygen. Those ingredients may contribute along with $Al_2O_3$ to the formation of an immiscible octahedral glassy component upon cooling the glass melt, which ultimately results in internal nucleation. $Cr_2O_3$, however, is nowhere mentioned in the paper.

Unfortunately, the conventional binary and ternary aluminosilicate glass compositions operable as precursors for the preparation of glass-ceramic bodies containing mullite as the predominant crystal phase are characterized by high melting and working temperatures, customarily at least 1800°C. MacDowell and Beall in the above paper employed melting temperatures of from 1850 to 1900°C. Not only do such elevated temperatures impose very high energy costs, but also attack upon the refractory materials of the melting unit becomes very serious.

Therefore, the primary objective of the present invention is to provide glass-ceramic articles containing mullite as the predominant and, preferably, sole crystal phase which are substantially and, desirably, totally transparent, which are prepared from parent glass compositions capable of being melted at temperatures no higher than 1650°C and which are crystallized *in situ* at high glass viscosities, viz. from $10^9$ to $10^{12}$ poises (from $10^8$ to $10^{11}$ Pa · s).

The use of dopants in glasses and glass-ceramics to impart colour, luminescence, fluorescence or other physical phenomena thereto is well-recognized in the art. Such dopants have included chromium, cobalt, copper, erbium, iron, manganese, nickel, praeseodymium, terbium, tin, uranium, vanadium and tungsten. Accordingly, an objective complementary to the above-described primary objective of the present invention would be to provide such mullite-containing, glass ceramic articles which are doped with ingredients to confer colour and/or luminescence and/or fluorescence thereto.

It has been observed that the $Cr^{3+}$ ion, when placed in an appropriate octahedral ligand field, will exhibit fluorescence in the infra-red region of the radiation spectrum. Hence, that phenomenon is the foundation of the alexandrite ($BeAl_2O_4$) single crystal laser recently described in the literature ("Alexandrite Lasers: Physics and Performance", J. C. Walling, *Laser Focus*, February, 1982). The paper also described the role of $Cr^{3+}$ excited state transitions in fabricating a tunable laser device based upon $Cr^{3+}$-doped alexandrite crystals. That disclosure has prompted the suggestion that a tunable infra-red laser could be designed utilizing $Cr^{3+}$-doped glasses or glass-ceramics. High optical quality, i.e. a very low level of haze, would be of paramount importance.

Another proposed application for $Cr^{3+}$-doped glasses or glass-ceramics would involve the use thereof in the fabrication of luminescent solar collectors for use in conjunction with silicon photovoltaic cells. The concept contemplates employing such collectors to convert broad spectrum sunlight to the near-infra-red portion of the spectrum and then to guide that radiation to silicon photovoltaic cells positioned around the periphery of the collector. Such a design would significantly reduce the quantity of silicon needed to produce a given amount of electricity, since silicon photovoltaic cells operate most efficiently in the near-infra-red regime of the spectrum. For that application, easy formability, chemical durability, broad temperature range and relatively low cost, as well as excellent optical quality, would be premium qualitites in addition to good fluorescence.

To investigate the possible utility of $Cr^{3+}$-doped, transparent glass-ceramic bodies in such applications as tunable lasers and solar collectors for use with silicon photovoltaic cells, compositions within each of the above-discussed three systems were doped with various levels of $Cr_2O_3$. Subsequent testing of samples indicated that the mullite-containing glass-ceramics were significantly more effective in converting ultra-violet and visible radiation to the infra-red wavelengths where silicon photovoltaic cells operate most efficiently. Upon crystallization to mullite-containing glass-ceramics, the precursor glass body changes in colour from a deep green to a transparent grey-brown, this phenomenon suggesting that the $Cr^{3+}$ ions undergo a change in coordination during that operation.

The mullite-containing specimens demonstrated a further advantage over the spinel-containing bodies. Thus, in contrast to the spinel-containing samples, the mullite-containing specimens displayed broad absorption in the visible region of the radiation spectrum, as evidenced by the grey-brown colour. Spectral measurements suggest that there is relatively little overlap between the absorption and fluorescence wavelengths this feature being of particular significance in a material being considered in an application, such as a luminescent solar collector.

Therefore, a particular objective of the present invention is to provide substantially and, preferably, totally transparent glass-ceramic articles containing mullite as the predominant and, most desirably, sole crystal phase from parent glass compositions which may be melted at temperatures no higher than 1650°C, which may be crystallized *in situ* at high glass viscosities, *viz.* from $10^9$ to $10^{12}$ poises (from $10^8$ to $10^{11}$ Pa · s) and which, when doped with $Cr^{3+}$ ions, will yield glass-ceramic bodies exhibiting broad absorption over the visible region of the radiation spectrum, strong fluorescence in the red and near infra-red regions of the radiation spectrum upon being exposed to ultra-violet and/or visible radiation and relatively little overlap between the absorption and fluorescent wavelengths.

It has now been found that the primary object of the present invention may be accomplished using precursor glasses having compositions expressed in terms of weight percent on the oxide basis,

3

comprising from 10 to 70% $SiO_2$, from 7 to 40% $B_2O_3$, from 14—50% $Al_2O_3$, from 0 to 35% RO, wherein RO comprises at least one member selected from MgO, CaO, SrO, BaO and PbO, and from 0 to 30% $R_2O$, wherein $R_2O$ comprises at least one alkali metal oxide selected from $Li_2O$, $Na_2O$, $K_2O$, $Rb_2O$ and $Cs_2O$. The mole ratio $Al_2O_3$:$RO+R_2O$ must be greater than 1.3:1 and is preferably above 1.75:1. The sum of $RO+R_2O$ may be zero, but is desirably above 2% to ensure the essential absence of haze in the glass-ceramic body. $Al_2O_3$ will generally be held below 35%, except where substantial levels of RO (at least 5%, by weight) are included in the composition. Arsenic oxide may be incorporated into the composition in customary amounts as a fining agent.

Accordingly, the present invention provides a substantially transparent glass-ceramic of the silica-alumina system having a predominant crystalline phase containing mullite characterised in that it is prepared from a precursor glass capable of being melted at temperatures no higher than 1650°C and is crystallized *in situ* at high viscosities of from $10^9$ to $10^{12}$ poises (from $10^8$ to $10^{11}$ Pa · s), and in that it comprises, expressed in terms of weight percent on the oxide basis, from 10 to 70% $SiO_2$, from 7 to 40% $B_2O_3$, from 14—50% $Al_2O_3$, from 0 to 35% RO, wherein RO comprises at least one of the following MgO, CaO, SrO, BaO and PbO and from 0 to 30% $R_2O$, wherein $R_2O$ comprises at least one of the following $Li_2O$, $Na_2O$, $K_2O$, $Rb_2O$ and $Cs_2O$, the mole ratio of $Al_2O_3$:$RO+R_2O$ being greater than 1.3:1.

To obtain the greatest degree of transparency in the final product, coupled with good chemical durability and glass melting and forming characteristics, the most preferred compositions in the $R_2O$-$Al_2O_3$-$B_2O_3$-$SiO_2$ system will comprise, expressed in terms of weight percent on the oxide basis, from 40 to 60% $SiO_2$, from 12 to 30% $B_2O_3$, from 17.5 to 27.5% $Al_2O_3$ and from 3 to 13% $Na_2O$ and/or $K_2O$. The most preferred compositions in the $RO$-$Al_2O_3$-$B_2O_3$-$SiO_2$ system will comprise, expressed in terms of weight percent on the oxide basis, from 15 to 45% $SiO_2$, from 20 to 30% $B_2O_3$, from 20 to 40% $Al_2O_3$ and from 5 to 30% RO, wherein RO comprises from 0 to 15% MgO, from 0 to 20% CaO, from 0 to 30% SrO and from 0 to 30% BaO.

In general, when employed as colourants, the transition metal ions will be present in amounts totalling no more than 1%, by weight, calculated as the oxide, while the rare earth metal ions, such as erbium, praeseodymium and terbium may be utilized in amounts totalling up to 5% by weight, calculated as the oxide. Such quantities do not significantly affect the overall physical and chemical properties of the base precursor glass or the glass-ceramic article crystallized *in situ* therefrom. Accordingly, up to 1% total of transition metal ion colourance and/or up to 5% total of rare earth metal ion colourants may be included in the present base compositions.

To secure the desired fluorescence, $Cr^{3+}$ ions will be present in an amount, calculated as the oxide, of from 0.01 to 1% $Cr_2O_3$, with the preferred range being from 0.03 to 0.3% $Cr_2O_3$. The essential absence of iron from the compositions is much preferred because $Fe^{2+}$ ions strongly absorb in the infra-red portion of the radiation spectrum where $Cr^{3+}$ ions fluoresce. Thus, the use of batch materials of high purity, i.e. substantially free from iron, is highly desirable. The inclusion of $As_2O_5$ in the batch may also be useful in retaining any iron present in the $Fe^{3+}$, rather than the $Fe^{2+}$, state.

In general, the glasses begin to crystallize at temperatures as low as 700°C. Higher temperatures expedite crystallization, but excessively high temperatures lead to grain growth of the mullite crystals with the consequent development of haze in the glass-ceramic product. Therefore, 950°C has been deemed to be a practical maximum crystallization temperature with levels lower than 900°C being preferred. To ensure the most uniformly fine-grained bodies, the parent glasses will frequently be subjected initially to a nucleating heat treatment at from 700 to 750°C, followed by growth of crystals upon those nuclei at from 750 to 900°C. Specific dwell periods at any one temperature are not required, but the glass must be exposed to temperatures within the 700—950°C regime for a period of time sufficient to effect the desired crystallization *in situ*. Extended heat treatment exposures also lead to grain growth of the mullite crystals. Consequently, times as brief as 0.25 hour may be sufficient at the upper extreme of the treatment range. In general, periods of from 1 to 8 hours have been found operable to yield glass-ceramics essentially free from haze. Where a two-step crystallization process is followed, nucleation of from 1 to 2 hours will precede from 1 to 4 hours crystallization heat treatment. The crystal phase will normally comprise from 20 to 65%, by volume, of the body.

In summary, the glass-ceramic articles according to the present invention are produced in accordance with the following four general steps:

(1) a glass batch of the proper composition is melted;

(2) that melt is simultaneously cooled to a temperature at least below the transformation range thereof and a glass article of a desired configuration shaped therefrom;

(3) that glass article is exposed to a temperature of from 700 to 950°C for a sufficient period of time to develop crystallization *in situ*; and

(4) that crystallized article is cooled to room temperature.

The relatively substantial amounts of $B_2O_3$ included in the base ternary aluminosilicate glass compositions are deemed to act as a flux therefor. $B_2O_3$ is uniquely suited to perform as a flux to reduce the refractoriness of these aluminosilicate glasses for four reasons: (1) there are no ternary $B_2O_3$-$Al_2O_3$-$SiO_2$ compounds in contrast with almost all other additions to the $Al_2O_3$-$SiO_2$ binary; (2) $B_2O_3$ may enter both the glass and mullite phases to improve the stability of the mullite-glass mixture; (3) boroaluminosilicate glasses with small amounts of modifying oxides have, in like manner to mullite, a relatively low coefficient of thermal expansion, thereby resulting in little expansion mismatch; and (4) $B_2O_3$-$Al_2O_3$-$SiO_2$ glasses are generally quite viscous, thereby helping to reduce mullite grain growth with consequent improved transparency.

The composition of the mullite crystallites, which have diameters of less than 1000Å ($1 \times 10^{-5}$ cms) in the bodies exhibiting the best transparency, is not known with irrefutable precision, but is believed to consist of a solid solution between $3Al_2O_3 \cdot 2SiO_2$ and $9Al_2O_3 \cdot 2B_2O_3$. Such solid solution is recognized and described in the phase equilibria literature, e.g. *Phase Diagrams for Ceramists,* Levin, Robbins and McMurdie, The American Ceramic Society, 1964, page 121.

X-ray diffraction analysis of the unit cell parameters of the crystallites has provided additional evidence to support the hypothesis that boron is incorporated into the mullite structure. Thus, the "c" cell edge in the mullite structure represents the distance between two oxygens attached to the same tetrahedral cation. This edge has been observed to shrink as the boron content is increased in the precursor glass batch. The shortening of this edge is consistent with the substitution of boron for aluminium in the mullite structure, since boron forms much shorter bonds to oxygen than does aluminium; that factor resulting in an overall decrease in the average oxygen-oxygen distance in the crystallite structure.

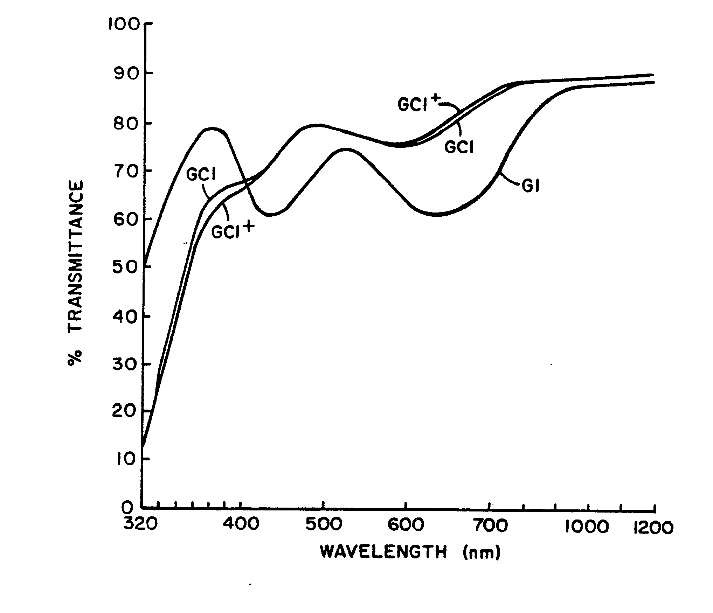

The accompanying drawing presents transmission curves illustrating the differences in absorption characteristics existing between the present precursor glass and a glass ceramic crystallised *in situ* therefrom.

Table 1 below records a number of parent glass compositions, expressed in terms of parts, by weight, on the oxide basis, illustrating the parameters of the present invention. Because the sum of the individual components totals or closely approximates 100, for all practical purposes, the reported values may be deemed to reflect weight percent. An approximate mole ratio $Al_2O_3$:$RO+R_2O$ is also reported for each composition. The actual batch ingredients may comprise various materials, either the oxide or other compound, which, when melted together, will be converted into the desired oxide in the proper proportions.

The constituents for each of the tabulated exemplary compositions were compounded, ball-milled together to assist in achieving a homogeneous melt and then placed into platinum crucibles. The crucibles were introduced into a furnace operating at 1650°C and the batches melted for from 4 to 16 hours. The melts were poured into steel moulds to produce slabs having the dimensions of about 4″×4″×1/2″ ($10 \times 10 \times 1.3$ cms) or 4″×8″×1/2″ ($10 \times 20 \times 1.3$ cms) and those slabs were immediately transferred to an annealer operating at about 600°C.

## TABLE 1

|  | 1 | 2 | 3 | 4 | 5 | 6 | 7 | 8 |
|---|---|---|---|---|---|---|---|---|
| $SiO_2$ | 45 | 40 | 45 | 45 | 60 | 45 | 50 | 40 |
| $B_2O_3$ | 15 | 15 | 20 | 15 | 15 | 30 | 15 | 25 |
| $Al_2O_3$ | 30 | 35 | 25 | 30 | 20 | 20 | 25 | 25 |
| $K_2O$ | 10 | 10 | 10 | — | 5 | 5 | 10 | 10 |
| $Na_2O$ | — | — | — | 10 | — | — | — | — |
| $Cr_2O_3$ | 0.05 | 0.05 | 0.05 | 0.05 | 0.05 | 0.05 | 0.05 | 0.05 |
| $As_2O_5$ | 0.05 | 0.05 | 0.05 | 0.05 | 0.05 | 0.05 | 0.05 | 0.05 |
| $Al_2O_3$:$RO+R_2O$ | 2.86 | 3.22 | 2.30 | 1.82 | 3.69 | 3.69 | 3.69 | 2.30 |

5

## 0 099 221

TABLE 1 (contd.)

|  | 9 | 10 | 11 | 12 | 13 | 14 | 15 | 16 |
|---|---|---|---|---|---|---|---|---|
| $SiO_2$ | 20 | 49 | 65 | 60 | 58 | 40 | 42.5 | 42.5 |
| $B_2O_3$ | 25 | 15 | 15 | 20 | 20 | 35 | 30 | 30 |
| $Al_2O_3$ | 35 | 30 | 15 | 15 | 20 | 20 | 20 | 20 |
| $K_2O$ | 20 | — | 5 | 5 | — | 5 | 7.5 | 7.5 |
| CaO | — | 6 | — | — | — | — | — | — |
| MgO | — | — | — | — | 2 | — | — | — |
| $Cr_2O_3$ | 0.05 | 0.05 | 0.05 | 0.05 | 0.05 | 0.05 | 0.10 | 0.30 |
| $As_2O_5$ | 0.05 | 0.05 | 0.05 | 0.05 | 0.05 | 0.05 | 0.05 | 0.05 |
| $Al_2O_3{:}RO+R_2O$ | 1.62 | 2.74 | 2.76 | 2.76 | 3.95 | 3.69 | 2.46 | 2.46 |

|  | 17 | 18 | 19 | 20 | 21 | 22 | 23 | 24 |
|---|---|---|---|---|---|---|---|---|
| $SiO_2$ | 53.5 | 55 | 45 | 45 | 50 | 15 | 55 | 55 |
| $B_2O_3$ | 25 | 25 | 20 | 20 | 25 | 30 | 20 | 20 |
| $Al_2O_3$ | 20 | 20 | 25 | 25 | 20 | 25 | 20 | 20 |
| $K_2O$ | — | — | — | — | — | — | 5 | 5 |
| $Li_2O$ | 1.5 | — | — | — | — | — | — | — |
| BaO | — | — | 10 | — | — | — | — | — |
| SrO | — | — | — | 10 | 5 | — | — | — |
| PbO | — | — | — | — | — | 30 | — | — |
| $Cr_2O_3$ | 0.05 | 0.05 | 0.05 | 0.05 | 0.05 | 0.05 | 0.10 | 0.20 |
| $As_2O_3$ | 0.05 | 0.05 | 0.05 | 0.05 | 0.05 | 0.05 | 0.05 | 0.05 |
| $Al_2O_3{:}RO+R_2O$ | 3.93 | ∞ | 3.76 | 2.53 | 4.06 | 1.83 | 3.69 | 3.69 |

6

TABLE 1 (contd.)

| | 25 | 26 | 27 | 28 | 29 | 30 | 31 | 32 |
|---|---|---|---|---|---|---|---|---|
| $SiO_2$ | 45 | 45 | 35 | 60 | 55 | 45 | 55 | 50 |
| $B_2O_3$ | 20 | 20 | 20 | 17.5 | 15 | 25 | 15 | 20 |
| $Al_2O_3$ | 25 | 25 | 20 | 20 | 25 | 20 | 20 | 20 |
| $K_2O$ | 10 | 10 | — | — | — | — | — | — |
| $Na_2O$ | — | — | — | 2.5 | — | — | — | — |
| $Cs_2O$ | — | — | 25 | — | — | — | — | — |
| $MgO$ | — | — | — | — | 5 | — | — | — |
| $BaO$ | — | — | — | — | — | 10 | 10 | — |
| $SrO$ | — | — | — | — | — | — | — | 10 |
| $Cr_2O_3$ | 0.10 | 0.20 | 0.20 | 0.05 | 0.05 | 0.05 | 0.05 | 0.05 |
| $As_2O_5$ | 0.05 | 0.05 | 0.05 | 0.05 | 0.05 | 0.05 | 0.05 | 0.05 |
| $Al_2O_3$:$RO+R_2O$ | 2.30 | 2.30 | 2.21 | 3.04 | 1.98 | 3.01 | 3.01 | 2.03 |

| | 33 | 34 | 35 | 36 | 37 | 38 | 39 | 40 |
|---|---|---|---|---|---|---|---|---|
| $SiO_2$ | 57.5 | 40 | 60 | 60 | 59 | 59 | 65 | 65 |
| $B_2O_3$ | 20 | 22.5 | 20 | 25 | 6 | 20 | 17.5 | 10 |
| $Al_2O_3$ | 20 | 22.5 | 20 | 15 | 25 | 20 | 15 | 20 |
| $K_2O$ | 2.5 | — | — | — | 10 | — | — | — |
| $PbO$ | — | 15 | — | — | — | — | — | — |
| $Na_2O$ | — | — | — | — | — | 1 | 2.5 | 5 |
| $Cr_2O_3$ | 0.05 | 0.05 | 0.05 | 0.05 | 0.05 | 0.05 | 0.05 | 0.05 |
| $As_2O_5$ | 0.05 | 0.5 | 0.5 | 0.5 | 0.5 | 0.5 | 0.5 | 0.5 |
| $Al_2O_3$:$RO+R_2O$ | 7.37 | 3.82 | ∞ | ∞ | 2.30 | 12.2 | 3.63 | 2.43 |

| | 41 | 42 | 43 | 44 | 45 | 46 | 47 | 48 |
|---|---|---|---|---|---|---|---|---|
| $SiO_2$ | 21.9 | 20.1 | 24.8 | 21.9 | 50 | 26.4 | 22.3 | 19.4 |
| $B_2O_3$ | 19.0 | 17.5 | 21.5 | 18.5 | — | 15.3 | 22.6 | 22.5 |
| $Al_2O_3$ | 46.3 | 42.6 | 42.0 | 45.2 | 40 | 44.9 | 33.1 | 33.0 |
| $CaO$ | 12.7 | 7.0 | 11.6 | 11.7 | — | — | — | — |
| $BaO$ | — | 12.8 | — | — | 10 | — | 24.9 | 24.8 |
| $MgO$ | — | — | — | — | — | 13.3 | — | — |
| $Cr_2O_3$ | 0.06 | 0.05 | 0.06 | — | 0.05 | 0.5 | 0.1 | 0.05 |
| $Al_2O_3$:$RO+R_2O$ | 2.0 | 2.0 | 2.0 | 2.0 | 6.0 | 2.0 | 2.0 | 2.0 |

7

TABLE 1 (contd.)

| | 49 | 50 | 51 | 52 | 53 | 54 |
|---|---|---|---|---|---|---|
| $SiO_2$ | 21.2 | 20.3 | 10.7 | 23.5 | 21.1 | 39.6 |
| $B_2O_3$ | 24.6 | 23.5 | 24.9 | 27.2 | 24.5 | 27.6 |
| $Al_2O_3$ | 36.0 | 34.5 | 36.5 | 39.9 | 35.9 | 26.9 |
| SrO | 18.3 | 8.8 | 27.8 | — | — | — |
| CaO | — | — | — | 5.5 | 4.9 | 5.9 |
| BaO | — | 12.9 | — | — | 13.5 | — |
| MgO | — | — | — | 3.9 | — | — |
| $Cr_2O_3$ | 0.05 | 0.05 | 0.05 | 0.05 | 0.05 | 0.05 |
| $Al_2O_3$:$RO+R_2O$ | 2.0 | 2.0 | 1.33 | 2.0 | 2.0 | 2.5 |

Table 2 below recites the visual appearance of the glass slab, the heat treatment schedule to which each slab was exposed to generate crystallization *in situ*, the visible appearance of the glass-ceramic slab and the visible fluorescence exhibited by specimens cut from the slabs to dimensions of about 1.5″×1.5″×0.25″ (3.8×3.8×0.6 cms), when irradiated using an ultra-violet lamp having a principal zone of radiation at about 2537Å ($2.537×10^{-5}$ cms). In each heat treatment schedule recorded, the glass slab was introduced into an electrically-fired furnace and the temperature raised therein at about 5°C/minute, except where noted otherwise, to the stated dwell periods. After completing the top temperature hold, the electricity to the furnace was merely cut off and the bodies allowed to cool to room temperature within the furnace. This practice has been termed "cooling at furnace rate" in the glass-ceramic art.

TABLE 2

| Example | Glass appearance | Heat treatment | Glass-ceramic appearance | Visible Fluorescence |
|---|---|---|---|---|
| 1 | Clear, green | 750°C for 2 hours 800°C for 4 hours | Grey-green, slight haze | Strong red |
| 2 | Clear, green | 750°C for 4 hours | Grey, clear, slight haze | Strong red |
| 3 | Clear, green | 700°C for 2 hours 750°C for 2 hours | Grey-turquoise, clear | Strong red |
| 4 | Clear, green | 700°C for 2 hours 750°C for 2 hours | Grey, hazy | Medium red |
| 5 | Clear, green | 750°C for 2 hours 850°C for 2 hours | Grey-green, clear | Medium red |
| 6 | Clear | 700°C for 2 hours 750°C for 2 hours | Grey, slight haze | Medium orange |
| 7 | Clear | 750°C for 2 hours 850°C for 2 hours | Grey-turquoise, clear | Medium red |
| 8 | Clear | 700°C for 2 hours 750°C for 2 hours | Grey, clear | Medium scarlet |
| 9 | Clear, green, slight de-vitrification | 700°C for 2 hours 750°C for 2 hours | Grey, slight haze | Weak orange |

**0 099 221**

TABLE 2 (contd.)

| Example | Glass appearance | Heat treatment | Glass-ceramic appearance | Visible Fluorescence |
|---|---|---|---|---|
| 10 | Clear, green, slight stone | 750°C for 2 hours 900°C for 2 hours | Hazy, translucent | Medium red |
| 11 | Clear, green, some seed | 700°C for 2 hours 750°C for 4 hours | Grey-green, clear | Weak red |
| 12 | Clear | 700°C for 2 hours 750°C for 4 hours | Grey-green, clear | Weak red |
| 13 | Green, slight haze | 750°C for 2 hours 800°C for 4 hours | Grey, clear, some haze | Medium red |
| 14 | Green, some haze in interior | 750°C for 2 hours 800°C for 4 hours | Grey, some haze | Medium red |
| 15 | Clear, blue-green | 700°C for 2 hours 750°C for 2 hours | Grey, clear | Medium red |
| 16 | Very dark blue-green | 700°C for 2 hours 800°C for 2 hours | Dark grey | Weak crimson |
| 17 | Blue-green, clear, some hazy areas | 700°C for 2 hours | Grey, clear | Medium red |
| 18 | Hazy | 700°C for 2 hours 750°C for 4 hours | Grey, slight haze | Medium red |
| 19 | Clear, green | 750°C for 2 hours 800°C for 4 hours | Grey, clear | Medium orange |
| 20 | Clear, green | 750°C for 2 hours 800°C for 4 hours | Grey, clear | Medium orange |
| 21 | Clear, green | 750°C for 2 hours 800°C for 4 hours | Grey, clear | Medium red |
| 22 | Clear on edges, centre hazy | 750°C for 2 hours 800°C for 4 hours | Grey, clear, some haze | Medium salmon |
| 23 | Clear, green | 750°C for 2 hours 800°C for 4 hours | Grey-turquoise, clear | Crimson |
| 24 | Dark green, clear | 750°C for 2 hours 800°C for 4 hours | Dark grey-turquoise, clear | Crimson |
| 25 | Green, clear | 750°C for 2 hours 800°C for 4 hours | Dark grey-turquoise, clear | Crimson |
| 26 | Dark green, clear | 750°C for 2 hours 800°C for 4 hours | Dark grey-turquoise, clear | Crimson |
| 27 | Green, clear | 700°C for 2 hours 750°C for 4 hours | Grey, clear | Medium red |
| 28 | Blue-green, clear | 750°C for 2 hours 800°C for 4 hours | Grey-green, clear | Strong crimson |
| 29 | Green, clear | 750°C for 2 hours 800°C for 4 hours | Grey, hazy | Strong salmon |

9

# 0 099 221

TABLE 2 (contd.)

| Example | Glass appearance | Heat treatment | Glass-ceramic appearance | Visible Fluorescence |
|---|---|---|---|---|
| 30 | Blue-green, seedy | 700°C for 2 hours<br>750°C for 2 hours | Grey-green, clear | Strong yellow |
| 31 | Green, clear | 750°C for 2 hours<br>800°C for 4 hours | Grey-turquoise, clear | Strong orange |
| 32 | Green, clear | 750°C for 2 hours<br>800°C for 4 hours | Hazy | Strong pink |
| 33 | Green, clear | 750°C for 2 hours<br>800°C for 4 hours | Grey-green, clear | Weak red-orange |
| 34 | Clear on edges, centre hazy | 700°C for 2 hours<br>800°C for 4 hours | Clear, slight haze | Medium salmon |
| 35 | Grey-green, some haze | 750°C for 2 hours | Grey, some haze | Medium red |
| 36 | Green, clear on edges centre hazy | 750°C for 2 hours<br>800°C for 4 hours | Grey-green, clear with some haze in interior | Medium red |
| 37 | Green, some seeds | 900°C for 4 hours | Grey-green, hazy | Weak red |
| 38 | Green, clear edges, hazy interior | 700°C for 2 hours<br>800°C for 4 hours | Grey-clear edges, hazy interior | Medium red |
| 39 | Blue-green, clear | 750°C for 2 hours<br>800°C for 4 hours | Grey-green edges | Medium strong crimson |
| 40 | Green, clear | 750°C for 2 hours | Grey-green, some haze | Weak red |
| 41 | Green, clear, some de-vitrification | 760°C for 3.2 hours<br>810°C for 2 hours | Grey, hazy | Medium magenta |
| 42 | Green, clear, some de-vitrification | 760°C for 3.2 hours<br>810°C for 2 hours | Grey-green, hazy | Strong magenta |
| 43 | Green, clear, some de-vitrification | 760°C for 3.2 hours<br>810°C for 2 hours | Grey, hazy | Medium magenta |
| 44 | Green, clear, some de-vitrification | 760°C for 3.2 hours<br>810°C for 2 hours | Hazy | No fluorescence |
| 45 | Did not melt | — | — | — |
| 46 | Very dark green, clear | 300°C/hour to 800°C<br>50°C/hour to 850°C<br>300°C/hour to 1000°C | Grey, translucent | Red |
| 47 | Green clear | 300°C/hour to 750°C<br>50°C/hour to 850°C<br>850°C for 1 hour | Grey, translucent | Dull red |

10

TABLE 2 (contd.)

| Example | Glass appearance | Heat treatment | Glass-ceramic appearance | Visible Fluorescence |
|---|---|---|---|---|
| 48 | Green, clear slight, devitrification | 850°C for 1 hour | Grey, hazy | Red |
| 49 | Green, clear, slight unmelted batch | 850°C for 1 hour | Grey, slight haze | Brown-red |
| 50 | Green, clear, slight de-vitrification | 850°C for 1 hour | Grey, hazy | Red |
| 51 | Green, clear, very slight devitrification | 850°C for 1 hour | Grey-white, cloudy | Dark red |
| 52 | Green, clear, slight de-vitrification | 850°C for 1 hour | Grey-white, cloudy | Dull red |
| 53 | Green, clear very slight devitrification | 850°C for 1 hour | Grey, very slight haze | Dull red-brown |
| 54 | Green, clear | 750°C for 3 hours 800°C for 1 hour | Grey, slight haze | Strong red |

A study of Tables 1 and 2 indicates the criticality of compositions and heat treatment to obtain the desired product. Thus, Example 44, containing no $Cr_2O_3$, evidences no fluorescence when subjected to ultra-violet radiation. Example 45, a "conventional" ternary aluminosilicate composition, could not be melted at 1650°C. Example 37 illustrates that at least 7% $B_2O_3$ is required to ensure a homogeneous parent glass.

The accompanying drawing comprises spectral transmission curves exhibited by polished plates of Example 1 utilizing a Varian Cary 17DX spectrophotometer, each plate having a thickness of 4 mm. The curve labelled G1 designates a plate of Example 1 in the state of annealed glass. The curve labelled GC1 signifies a plate of Example 1 in the glass-ceramic state, the precursor glass having been crystallized *in situ* via heat treatment at 750°C for 4 hours (the heat treatment applied to Example 1 in Table 2). The curve labelled GC 1[+] indicates a plate of Example 1 in the glass-ceramic state, the precursor glass having been crystallized *in situ* via a two-step heat treatment, *viz.* 750°C for 2 hours, followed by 800°C for 4 hours.

It is immediately apparent from the drawing that the transmission of the parent glass is substantially different from that of the glass-ceramic crystallized therefrom. For example, the glass-ceramic is actually more transmitting in the visible region of the radiation spectrum (400—700 nm) than the original glass. The glass-ceramic is more uniformly absorbing across the visible region (manifested by the grey element in the colour) than the glass (evidenced by the solid green colour). Furthermore, the glass-ceramic is more absorbing in the ultra-violet regime of the radiation spectrum (<400 nm). The greater absorption in the 350—400 nm range of wavelengths is of particular significance where a material is to be utilized in a solar collector, because this is the area of maximum ultra-violet output in the solar spectrum.

A comparison of curves GC 1 and GC 1[+] demonstrates that variations in heat treatments do not substantively alter the transmittance characteristics of the present products.

**Claims**

1. A substantially transparent glass-ceramic of the silica-alumina system having a predominant crystalline phase containing mullite characterised in that it is prepared from a precursor glass capable of being melted at temperatures no higher than 1650°C and is crystallized *in situ* at high viscosities of from $10^9$ to $10^{12}$ poises (from $10^8$ to $10^{11}$ Pa · s), and in that it comprises, expressed in terms of weight percent on the oxide basis, from 10 to 70% $SiO_2$, from 7 to 40% $B_2O_3$, from 14 to 50% $Al_2O_3$, from 0 to 35% RO, wherein RO comprises at least one of the following MgO, CaO, SrO, BaO and PbO and from 0 to 30% $R_2O$, wherein $R_2O$ comprises at least one of the following $Li_2O$, $Na_2O$, $K_2O$, $Rb_2O$ and $Cs_2O$, the mole ratio of $Al_2O_3$:$RO+R_2O$ being greater than 1.3:1.

11

**0 099 221**

2. A glass ceramic as claimed in claim 1 wherein the content of $RO+R_2O$ is greater than 2% and/or the mole ratio of $Al_2O_3:RO+R_2O$ is greater than 1.75:1.

3. A glass-ceramic as claimed in claim 1 or claim 2 comprising from 0 to 30% $R_2O$ wherein $R_2O$ comprises at least one of the following in the indicated proportions of from 0 to 10% $Li_2O$, from 0 to 15% $Na_2O$, from 0 to 25% $K_2O$, from 0 to 30% $Rb_2O$ and from 0 to 30% $Cs_2O$.

4. A glass ceramic as claimed in any of claims 1 to 3 comprising from 40 to 60% $SiO_2$, from 12 to 30% $B_2O_3$, from 17.5 to 27.5% $Al_2O_3$ and from 3 to 13% $Na_2O$ and/or $K_2O$, the mole ratio of $Al_2O_3:R_2O$ being greater than 1.75:1.

5. A glass-ceramic as claimed in any of claims 1 to 3 comprising from 15 to 45% $SiO_2$, from 20 to 30% $B_2O_3$, from 20 to 40% $Al_2O_3$ and from 5 to 30% RO, wherein RO comprises at least one of the following in the indicated proportions of from 0 to 15% MgO, from 0 to 20% CaO, from 0 to 30% SrO, from 0 to 30% BaO and from 0 to 30% PbO, the mole ratio of $Al_2O_3:RO$ being greater than 1.75:1.

6. A glass-ceramic as claimed in any of claims 1 to 5 comprising up to 1% total of one or more transition metal oxides and/or up to 5% total of one or more rare earth metal oxides as colourants.

7. A glass-ceramic as claimed in any of claims 1 to 6 comprising from 0.01 to 1% $Cr_2O_3$ and demonstrating broad absorption over the visible region of the radiation spectrum, strong fluorescence in the red and near infrared portions of the spectrum when exposed to ultra-violet and/or visible radiation and relatively little overlap of the absorption and fluorescent spectra.

8. A glass-ceramic as claimed in claim 7 comprising from 0.03 to 0.3% $Cr_2O_3$.

9. A process for the production of a substantially transparent glass-ceramic as claimed in any of claims 1 to 8 characterised in that it comprises:

(a) melting an appropriate batch for a precursor glass;

(b) simultaneously cooling the melt to a temperature at least below the transformation range thereof and shaping the glass as desired;

(c) exposing the glass to a temperature of from 700 to 950°C to cause the generation of crystallization *in situ*; and

(d) cooling the crystallized glass to room temperature.

10. A process as claimed in claim 9 wherein the glass is initially exposed to a temperature of from 700 to 750°C for from 1 to 2 hours followed by exposure to a temperature of from 750 to 900°C for from 1 to 4 hours.


**Patentansprüche**

1. Eine im wesentlichen transparente Glaskeramik vom Silizium(IV)-Oxid-Aluminiumoxid-System mit einer vorherrschenden Kristallphase, enthaltend Mullit dadurch gekennzeichnet, daß sie hergestellt ist aus einem Zwischenglas, das bei Temperaturen von nicht höher als 1650°C geschmolzen werden kann und *in situ* bei hohen Viskositäten von $10^9$ bis $10^{12}$ Poise (von $10^8$ bis $10^{11}$ Pa · s) kristallisiert ist, und daß sie umfaßt—ausgedrückt in Gew.% auf Oxidbasis—von 10 bis 70% $SiO_2$, von 7 bis 40% $B_2O_3$, von 14 bis 50% $Al_2O_3$, von 0 bis 35% RO, wobei RO wenigstens eine der folgenden Verbindungen MgO, CaO, SrO, BaO und PbO umfaßt und von 0 bis 30% $R_2O$, wobei $R_2O$ wenigstens eine der folgenden Verbindungen $Li_2O$, $Na_2O$, $K_2O$, $Rb_2O$ und $Cs_2O$ umfaßt und wobei das Molverhältnis von $Al_2O_3:RO+R_2O$ größer ist als 1,3:1.

2. Glaskeramik nach Anspruch 1, wobei der Gehalt an $RO+R_2O$ größer ist als 2 % und/oder das Molverhältnis von $Al_2O_3:RO+R_2O$ größer ist als 1,75:1.

3. Glaskeramik nach Anspruch 1 oder 2, umfassend von 0 bis 30 % $R_2O$, wobei $R_2O$ wenigstens eine der folgenden Verbindungen von 0 bis 10 % $Li_2O$, von 0 bis 15% $Na_2O$, von 0 bis 25% $K_2O$, von 0 bis 30% $Rb_2O$ und von 0 bis 30% $Cs_2O$ in den angegebenen Mengenverhältnissen umfaßt.

4. Glaskeramik nach einem der Ansprüche 1 bis 3, umfassend von 40 bis 60% $SiO_2$, von 12 bis 30% $B_2O_3$, von 17,5 bis 27,5% $Al_2O_3$ und von 3 bis 13% $Na_2O$ und/oder $K_2O$, wobei das Molverhältnis von $Al_2O_3:R_2O$ größer als 1,75:1 ist.

5. Glaskeramik nach einem der Ansprüche 1 bis 3, umfassend von 15 bis 45% $SiO_2$, von 20 bis 30% $B_2O_3$, von 20 bis 40% $Al_2O_3$ und von 5 bis 30% RO, wobei RO wenigstens eine der folgenden Verbindungen von 0 bis 15% MgO, von 0 bis 20% CaO, von 0 bis 30% SrO, von 0 bis 30% BaO und von 0 bis 30% PbO in den angegebenen Mengenverhältnissen umfaßt, wobei das Molverhältnis von $Al_2O_3:RO$ größer als 1,75:1 ist.

6. Glaskeramik nach einem der Ansprüche 1 bis 5, umfassend bis zu 1% insgesamt von einem oder mehreren Übergangsmetall-Oxiden und/oder bis zu 5% insgesamt von einem oder mehreren Seltenen Erdmetall-Oxiden als Färbemittel.

7. Glaskeramik nach einem der Ansprüche 1 bis 6, umfassend von 0,01 bis 1 % $Cr_2O_3$ mit breiter Absorption über den sichtbaren Bereich des Strahlungsspektrums, starke Fluoreszenz im Roten und den nahen Infrarotteilen des Spektrums wenn sie ultravioletter und/oder sichtbarer Strahlung ausgesetzt ist und relativ kleiner Überlappung der Absorptions- und Fluoreszenz-Spektren.

8. Glaskeramik nach Anspruch 7, umfassend von 0,03 bis 0,3% $Cr_2O_3$.

9. Verfahren zur Herstellung einer im wesentlichen transparenten Glaskeramik nach einem der Ansprüche 1 bis 8, dadurch gekennzeichnet, daß es umfaßt:

a. Schmelzen eines geeigneten Glasansatzes für ein Zwischenglas;

**0 099 221**

b gleichzeitiges Kühlen der Schmelze auf eine Temperatur wenigstens unterhalb deren Transformationsbereichs und Formen des gewünschten Glases;

c. Aussetzen des Glases einer Temperatur von 700 bis 950°C, um die Entwicklung einer Kristallisation *in situ* zu verursachen; und

d Kühlen des kristallisierten Glases auf Raumtemperatur.

10. Verfahren nach Anspruch 9, wobei das Glas zunächst einer Temperatur von 700 bis 750°C für 1 bis 2 Stunden ausgesetzt wird und danach einer Temperatur von 750 bis 900°C für 1 bis 4 Stunden ausgesetzt wird.

**Revendications**

1. Une vitrocéramique substantiellement transparente du système silice-alumine comportant une phase cristalline prédominante contenant de la mullite, caractérisée en ce qu'elle est préparée à partir d'un verre précurseur apte à être fondu à des températures non supérieures à 1650°C et est cristallisée *in situ* à de fortes viscosités de verre de $10^9$ à $10^{12}$ poises (de $10^8$ à $10^{11}$ Pa · s), et en ce qu'elle comprend, en pourcentages pondéraux sur la base des oxydes, de 10 à 70 % de $SiO_2$, de 7 à 40 % de $B_2O_3$, de 14 à 50 % d'$Al_2O_3$, de 0 à 35 % de RO, RO comprenant l'un au moins des oxydes MgO, CaO, SrO, BaO et PbO et de 0 à 30 % de $R_2O$, $R_2O$ comprenant l'un au moins des oxydes $Li_2O$, $Na_2O$, $K_2O$, $Rb_2O$ et $Cs_2O$, le rapport molaire $Al_2O_3/RO+R_2O$ étant supérieur à 1,3/1.

2. Une vitrocéramique selon la revendication 1, dans laquelle la teneur en RO+$R_2O$ est supérieure à 2 % et/ou le rapport molaire $Al_2O_3/RO+R_2O$ est supérieur à 1,75/1.

3. Une vitrocéramique selon la revendication 1 ou la revendication 2, qui comprend de 0 à 30 % de $R_2O$, $R_2O$ comprenant l'un au moins des oxydes suivants dans les proportions indiquées: de 0 à 10 % de $Li_2O$, de 0 à 15 % de $Na_2O$, de 0 à 25 % de $K_2O$, de 0 à 30 % de $Rb_2O$ et de 0 à 30 % de $Cs_2O$.

4. Une vitrocéramique selon l'une quelconque des revendications 1 à 3, qui comprend de 40 à 60 % de $SiO_2$, de 12 à 30 % de $B_2O_3$, de 17,5 à 27,5 % d'$Al_2O_3$ et de 3 à 13 % de $Na_2O$ et/ou de $K_2O$, le rapport molaire $Al_2O_3/R_2O$ étant supérieur à 1,75/1.

5. Une vitrocéramique selon l'une quelconque des revendications 1 à 3, qui comprend de 15 à 45 % de $SiO_2$, de 20 à 30 % de $B_2O_3$, de 20 à 40 % d'$Al_2O_3$ et de 5 à 30 % de RO, RO comprenant l'un au moins des oxydes suivants dans les proportions indiquées: de 0 à 15 % de MgO, de 0 à 20 % de CaO, de 0 à 30 % de SrO, de 0 à 30 % de BaO et de 0 à 30% de PbO, le rapport molaire $Al_2O_3/RO$ étant supérieur à 1,75/1.

6. Une vitrocéramique selon l'une quelconque des revendications 1 à 5, que comprend jusqu'à 1 % au total d'un ou plusieurs oxydes de métaux de transition et/ou jusqu'à 5 % au total d'un ou plusieurs oxydes de métaux des terres rares en tant que colorants.

7. Une vitrocéramique selon l'une quelconque des revendications 1 à 6, qui comprend de 0,01 à 1 % de $Cr_2O_3$ et présente une large absorption sur l'étendue de la région visible du spectre de rayonnement, une forte fluorescence dans les portions du rouge et du proche infrarouge du spectre lorsqu'elle est exposée à un rayonnement ultraviolet et/ou visible et un relativement faible chevauchement entre les spectres d'absorption et de fluorescence.

8. Une vitrocéramique selon la revendication 7, qui comprend de 0,03 à 0,3 % de $Cr_2O_3$.

9. Un procédé pour l'obtention d'une vitrocéramique substantiellement transparente selon l'une quelconque des revendications 1 à 8, caractérisé en ce qu'il comprend les opérations consistant:

(a) à fondre une charge vitrifiable appropriée pour un verre précurseur;

(b) à refroidir la masse fondue jusqu'à une température au moins inférieure à sa gamme de transformation et, simultanément, à façonner le verre comme désiré;

(c) à exposer le verre à une température de 700 à 950°C pour donner naissance à une cristallisation *in situ;* et

(d) à refroidir le verre cristallisé jusqu'à la température ambiante.

10. Un procédé selon la revendication 9, dans lequel le verre est initiallement exposé à une température de 700 à 750°C pendant 1 à 2 heures, puis soumis à une exposition à une température de 750 à 900°C pendant 1 à 4 heures.

13